# EUROPÄISCHE PATENTSCHRIFT

(11) **EP 0 829 948 B1**
(45) Veröffentlichungstag und Bekanntmachung des Hinweises auf die Patenterteilung: **03.03.2004**
(21) Anmeldenummer: 97810592.2
(22) Anmeldetag: 21.08.1997
(51) Int. Cl.: H02M 1/12

(54) **Stromrichterschaltungsanordnung mit lastseitigem Filter**
Power converter device with output filter
Convertisseur de puissance avec filtre côté charge

(30) Priorität: 13.09.1996 DE 19637290
(43) Veröffentlichungstag der Anmeldung: 18.03.1998
(73) Patentinhaber: ABB Schweiz AG, 5400 Baden (CH)
(72) Erfinder: Steinke, Jürgen Kurt, Dr., 79774 Albbruck (DE)
(74) Vertreter: ABB Patent Attorneys

(56) Entgegenhaltungen:
- EP-A- 0 682 402
- US-A- 3 881 137
- US-A- 4 967 334
- US-A- 5 343 381

## Beschreibung

### Technisches Gebiet

Die Erfindung bezieht sich auf das Gebiet der Leistungselektronik. Sie geht aus von einer Stromrichterschaltungsanordnung mit einem lastseitig angeordneten Filternetzwerk gemäss dem Oberbegriff des ersten Anspruchs.

### Stand der Technik

Eine solche Stromrichterschaltungsanordnung ist schon in den Europäischen Patentanmeldungen EP 0 682 401 A1 und EP 0 682 402 A2 beschrieben. In diesen Schriften ist ein allenfalls mittels Widerständen verlustbehafteter LC-Tiefpass zwischen die Lastanschlüsse und eine Last eingefügt. Die Anschlüsse der Kondensatoren können entweder zu einem Sternpunkt zusammen geführt werden oder mit dem Plus- bzw. Minusanschluss des Zwischenkreises verbunden sein. Die in diesen Schriften gezeigten Schaltungsanordnungen werden vorzugsweise für Niederspannungsanwendungen eingesetzt.

Bei Niederspannungsanwendungen ist der Abstand zwischen der Nutzfrequenz (in der Regel 50/60 Hz) und der Schaltfrequenz der Halbleiterschalter sowie deren Vielfache (Oberschwingungen) sehr gross. Die Resonanzfrequenz des LC-Tiefpasses kann deshalb im Bereich zwischen der höchsten Nutzfrequenz und der niedrigsten Oberschwingung so gewählt werden, dass die Resonanzfrequenz des Filters nicht angeregt wird. Ist aber die Schaltfrequenz der Halbleiterschalter niedriger, z.B. bei Mittel- oder Hochspannungsanwendungen, kann eine solche Auslegung nicht mehr gefunden werden. Eine mögliche Lösung wäre die aktive Ausregelung der Resonanzfrequenz durch die Umrichterregelungselektronik. Dies erfordert jedoch einen erheblichen Rechenaufwand und zusätzliche Messeinrichtungen. Ein andere Lösung wäre die Erweiterung des Filters um einen Bedämpfungswiderstand, entweder in Serie mit dem Kondensator oder parallel zur Drossel (siehe auch EP 0 682 402). Bei Mittel- und Hochspannungsanwendungen würden aber die Verluste im Bedämpfungswiderstand für eine wirksame Bedämpfung zu hoch.

### Darstellung der Erfindung

Aufgabe der vorliegenden Erfindung ist es, eine Stromrichterschaltungsanordnung anzugeben, bei welcher die Resonanzfrequenz des lastseitig angeordneten Filters wirksam bedämpft werden kann, ohne dass die Verluste zu gross werden.

Diese Aufgabe wird bei einer Stromrichterschaltungsanordnung der eingangs genannten Art durch die Merkmale des ersten Anspruchs gelöst.

Kern der Erfindung ist es also, dass im Rahmen des Filters Dämpfungsmittel vorgesehen sind, die ein selektive Bedämpfung der Resonanzfrequenz des Filters erlauben. Nach einem realisierten Ausführungsbeispiel umfassen die Dämpfungsmittel einen Parallelschwingkreis. Der Parallelschwingkreis ist für jeden Phasenbaustein vorgesehen und wird in Serie mit dem Kondensator des LC-Tiefpasses geschaltet. Der zweite Anschluss der Parallelschwingkreise kann entweder zu einem gemeinsamen, allenfalls geerdeten Sternpunkt zusammengefasst werden oder zum Plus- und/oder Minusanschluss des Zwischenkreises zurückgeführt sein. Im Falle der Zurückführung zum Plus- und zum Minusanschluss sind pro Phasenbaustein zwei Parallelschwingkreise und zwei Filterkondensatoren vorgesehen.

Weitere Ausführungsbeispiele ergeben sich aus den entsprechenden abhängigen Ansprüchen.

Der Vorteil des erfindungsgemässen Aufbaus besteht darin, dass die Resonanzfrequenz des LC-Tiefpasses selektiv gedämpft werden kann, so dass im übrigen Frequenzbereich kaum eine Dämpfung wirksam ist und die Verlust gesamthaft verringert werden können.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein erstes Ausführungsbeispiel des erfindungsgemässen Schaltungsaufbaus;
- **Fig. 2**: Ein zweites Ausführungsbeispiel des erfindungsgemässen Schaltungsaufbaus;
- **Fig. 3**: Ein drittes Ausführungsbeispiel des erfindungsgemässen Schaltungsaufbaus.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

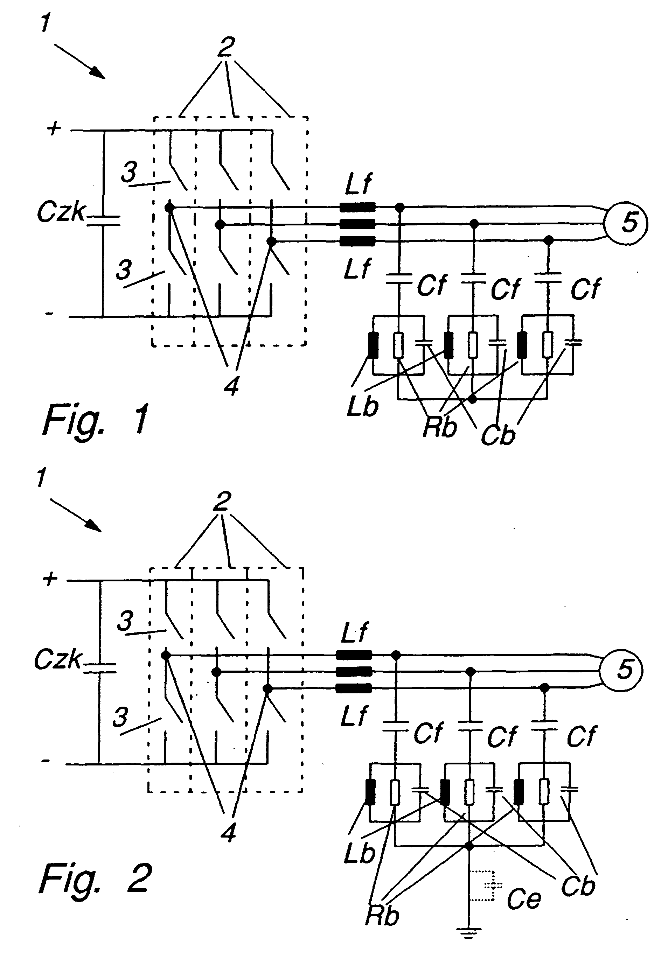

Figur 1 zeigt ein erstes Ausführungsbeispiel einer erfindungsgemässen Schaltungsanordnung 1. Mit 2 sind drei Phasenbausteine bezeichnet, die an einen Gleichspannungszwischenkreis, dargestellt durch den Zwischenkreiskondensator Czk und den Plus- und den Minusanschluss +/-, angeschlossen sind. Die Phasenbausteine werden durch eine Serieschaltung von Leistungshalbleiterschaltern 3, z.B. GTOs, IGBTs oder Leistungstransistoren, gebildet, wobei ein mittlerer Knotenpunkt der Serieschaltung einen Lastanschluss 4 bildet. An den Lastanschluss 4 kann eine Last 5, z.B. ein Motor, angeschlossen werden. Zwischen den Lastanschluss 4 und die Last 5 ist nun ein Filternetzwerk, bestehend aus einer Filterinduktivität Lf und einem Filterkondensator Cf, geschaltet. Das Filternetzwerk wirkt also als LC-Tiefpass mit dem Zweck, die Last 5 vor zu steilen Spannungsflanken verursacht durch die schaltende Arbeitsweise der Leistungshalbleiterschalter 3 zu schützen.

Nach der Erfindung umfasst das Filternetzwerk ausserdem Dämpfungsmittel, gebildet z.B. aus einem Dämpfungskondensator Cb, einer Dämpfungsinduktivität Lb und einem Dämpfungswiderstand Rb. Diese Elemente sind in der Art eines Parallelschwingkreises angeordnet. Die Resonanzfrequenz des Parallelschwinkreises wird nun ungefähr gleich gross wie die Hauptresonanzfrequenz des Lf-Cf-Filters gewählt. Dadurch erhält man im Bereich der Hauptresonanzfrequenz eine wirksame und selektive Dämpfung der Einflüsse der Hauptresonanzfrequenz.

Die Resonanzfrequenz des Parallelschwingkreises wird vorzugsweise um weniger als einen Faktor 2 und insbesondere etwa gleich gross wie die Hauptresonanzfrequenz gewählt. Je genauer die Parallelschwingkreisresonanzfrequenz auf die Hauptresonanzfrequenz abgestimmt werden kann, desto selektiver ist die Dämpfung.

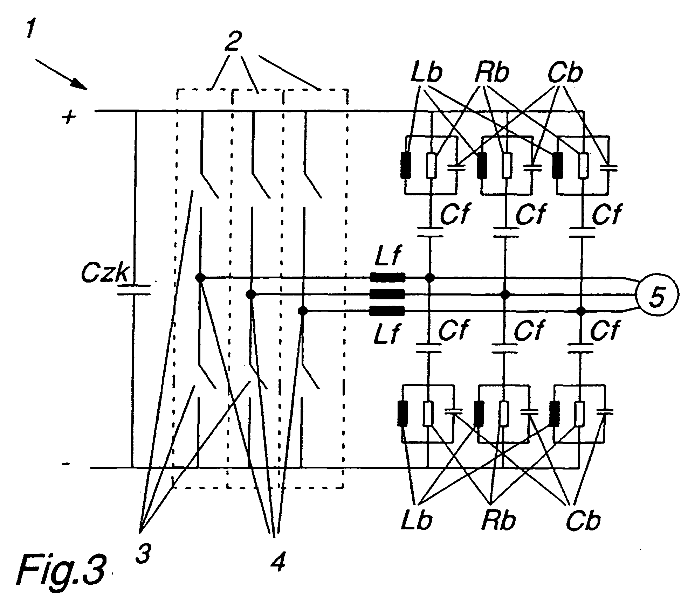

Die Kondensatoren Cb der erfindungsgemässen Parallelschwingkreise können entweder wie in Figur 1 gezeigt zu einem gemeinsamen Sternpunkt zusammengefasst werden, oder es sind pro Phasenbaustein zwei Parallelschwingkreise vorgesehen, die zum Plus- bzw. Minusanschluss des Zwischenkreises zurückgeführt werden (Figur 3). Der gemeinsame Sternpunkt kann gemäss Figur 2 auch geerdet werden, insbesondere kann zu diesem Zweck ein Erdungskondensator Ce vorgesehen werden. Der gemeinsame Sternpunkt kann aber auch entweder mit dem Plus- oder dem Minusanschluss des Zwischenkreises verbunden werden.

Die Anordnung mit den geerdeten bzw. auf einen gemeinsamen Sternpunkt zusammengeführten Parallelschwingkreisen zeichnet sich gegenüber der Anordnung nach Figur 3 durch einen verminderten Bauteilaufwand und damit durch geringere Herstellungskosten aus. Die Variante nach Figur 3 ist hingegen im Bezug auf Filterung von Gleichanteilen im Ausgangsspannungssystem von Vorteil. Dasselbe gilt für die Variante mit auf den Plus- oder Minusanschluss zurückgeführten Sternpunkt.

Insgesamt steht also mit der Erfindung eine Stromrichterschaltungsanordnung mit lastseitig angeordnetem Filter zur Verfügung, bei dem die Verluste gesamthaft gesehen verringert werden können.

### Bezugszeichenliste

- 1: Stromrichterschaltungsanordnung
- 2: Phasenbaustein
- 3: Leistungshalbleiterschalter
- 4: Lastanschluss
- 5: Last
- Lf: Filterinduktivität
- Cf: Filterkondensator
- Lb: Dämpfungsinduktivität
- Cb: Dämpfungskondensator
- Rb: Dämpfungswiderstand
- Ce: Erdungskondensator
- Czk: Zwischenkreiskondensator
- +: Plusanschluss
- -: Minusanschluss

## Patentansprüche

1. Stromrichterschaltungsanordnung (1) mit mindestens einem an einen Zwischenkreis (Czk) angeschlossenen Phasenbaustein (2), der eine Serieschaltung von Leistungshalbleiterschaltern (3) umfasst, wobei ein mittlerer Knotenpunkt der Serieschaltung einen Lastanschluss (4) bildet, und mit einem Filternetzwerk (Cf, Lf), das zwischen den Lastanschluss (4) und eine Last (5) geschaltet ist und eine Hauptresonanzfrequenz bildet, **dadurch gekennzeichnet, dass** das Filternetzwerk (Cf, Lf) Dämpfungsmittel (Cb, Lb, Rb) umfasst, die für eine selektive Dämpfung der Hauptresonanzfrequenz ausgebildet sind.

2. Stromrichterschaltungsanordnung nach Anspruch 1, **dadurch gekennzeichnet, dass** das Filternetzwerk pro Phasenbaustein (2) einen Tiefpass mit einer Serieschaltung einer Filterinduktivität (Lf) und einem Filterkondensator (Cf) umfasst, wobei die Last (5) an den gemeinsamen Knotenpunkt der Serieschaltung der Filterinduktivität (Lf) und des Filterkondensators (Cf) angeschlossen ist.

3. Stromrichterschaltungsanordnung nach Anspruch 2, **dadurch gekennzeichnet, dass** die Dämpfungsmittel pro Phasenbaustein (2) mindestens einen mit dem Filterkondensator (Cf) in Serie geschalteten Parallelschwingkreis mit einer Dämpfungsinduktivität (Lb), einem Dämpfungskondensator (Cb) und einem Dämpfungswiderstand (Rb) umfassen.

4. Stromrichterschaltungsanordnung nach Anspruch 3, **dadurch gekennzeichnet, dass** die Parallelschwingkreise aller Phasenbausteine (2) auf einen gemeinsamen Sternpunkt geführt sind.

5. Stromrichterschaltungsanordnung nach Anspruch 4, **dadurch gekennzeichnet, dass** der gemeinsame Sternpunkt der Parallelschwingkreise geerdet ist.

6. Stromrichterschaltungsanordnung nach Anspruch 4, **dadurch gekennzeichnet, dass** der gemeinsame Sternpunkt der Parallelschwingkreise über einen Erdungskondensator (Ce) geerdet ist.

7. Stromrichterschaltungsanordnung nach Anspruch 4, **dadurch gekennzeichnet, dass** der gemeinsame Sternpunkt des Parallelschwingkreise entweder mit dem Plusanschluss (+) oder dem Minusanschluss (-) verbunden ist.

8. Stromrichterschaltungsanordnung nach Anspruch 3, **dadurch gekennzeichnet, dass** pro Phasenbaustein (2) zwei Filterkondensatoren (Cf) und zwei Parallelschwingkreise vorgesehen sind, von denen der eine ausserdem mit dem Minusanschluss (-) des Zwischenkreises (Czk) und der andere ausserdem mit dem Plusanschluss (+) des Zwischenkreises (Czk) verbunden ist.

9. Stromrichterschaltungsanordnung nach einem der Ansprüche 3 bis 8, **dadurch gekennzeichnet, dass** der Parallelschwingkreis eine Resonanzfrequenz aufweist, die um weniger als einen Faktor 2 von der Hauptresonanzfrequenz abweicht und insbesondere ungefähr gleich der Hauptresonanzfrequenz ist.

## Claims

1. Converter circuit arrangement (1) having at least one phase module (2) which is connected to an intermediate circuit (Czk) and has a series circuit of power semiconductor switches (3), a central node point of the series circuit forming a load connection (4), and having a filter network (Cf, Lf) which is connected between the load connection (4) and a load (5) and forms a main resonant frequency, **characterized in that** the filter network (Cf, Lf) has damping means (Cb, Lb, Rb) which are designed for selectively damping the main resonant frequency.

2. Converter circuit arrangement according to Claim 1, **characterized in that** the filter network has one low-pass filter, having a series circuit of a filter inductance (Lf) and a filter capacitor (Cf), per phase module (2), the load (5) being connected to the common node point of the series circuit of the filter inductance (Lf) and the filter capacitor (Cf).

3. Converter circuit arrangement according to Claim 2, **characterized in that** the damping means have at least one parallel resonant circuit, connected in series with the filter capacitor (Cf) and having a damping inductance (Lb), a damping capacitor (Cb) and a damping resistor (Rb), per phase module (2).

4. Converter circuit arrangement according to Claim 3, **characterized in that** the parallel resonant circuits of all of the phase modules (2) are connected to a common star point.

5. Converter circuit arrangement according to Claim 4, **characterized in that** the common star point of the parallel resonant circuits is earthed.

6. Converter circuit arrangement according to Claim 4, **characterized in that** the common star point of the parallel resonant circuits is earthed via an earthing capacitor (Ce).

7. Converter circuit arrangement according to Claim 4, **characterized in that** the common star point of the parallel resonant circuits is connected either to the positive connection (+) or to the negative connection (-).

8. Converter circuit arrangement according to Claim 3, **characterized in that** two filter capacitors (Cf) and two parallel resonant circuits are provided per phase module (2), one parallel resonant circuit also being connected to the negative connection (-) of the intermediate circuit (Czk) and the other also being connected to the positive connection (+) of the intermediate circuit (Czk).

9. Converter circuit arrangement according to one of Claims 3 to 8, **characterized in that** the parallel resonant circuit has a resonant frequency which differs from the main resonant frequency by less than a factor of 2 and is in particular approximately equal to the main resonant frequency.

## Revendications

1. Convertisseur de puissance (1) avec au moins un élément de phase (2) raccordé à un circuit intermédiaire (Czk), qui englobe une connexion en série de commutateurs statiques de puissance (3), où un point nodal médian de la connexion en série forme un branchement de charge (4), et avec un réseau de filtrage (Cf, Lf) qui est monté entre le branchement de charge (4) et une charge (5) et forme une fréquence de résonance principale, **caractérisé en ce que** le réseau de filtrage (Cf, Lf) englobe des moyens d'amortissement (Cb, Lb, Rb) développés pour un amortissement sélectif de la fréquence de résonance principale.

2. Convertisseur de puissance selon la revendication 1, **caractérisé en ce que** le réseau de filtrage englobe d'un passe-bas par élément de phase (2) avec une connexion en série d'une inductance de filtre (Lf) et d'un condensateur de filtre (Cf), moyennant quoi la charge (5) est raccordée au point nodal commun de la connexion en série de l'inductance de filtre (Lf) et du condensateur de filtre (Cf).

3. Convertisseur de puissance selon la revendication 2, **caractérisé en ce que** les moyens d'amortissement englobent, par élément de phase (2), au moins un circuit oscillant parallèle connecté en série avec le condensateur de filtre (Cf) avec une inductance d'amortissement (Lb), un condensateur d'amortissement (Cb) et une résistance d'amortissement (Rb).

4. Convertisseur de puissance selon la revendication 3, **caractérisé en ce que** les circuits oscillants parallèles de tous les éléments de phase (2) sont menés vers un point neutre commun.

5. Convertisseur de puissance selon la revendication 4, **caractérisé en ce que** le point neutre commun des circuits oscillants parallèles est mis à la terre.

6. Convertisseur de puissance selon la revendication 4, **caractérisé en ce que** le point neutre commun des circuits oscillants parallèles est mis à la terre via un condensateur de mise à la terre (Ce).

7. Convertisseur de puissance selon la revendication 4, **caractérisé en ce que** le point neutre commun des circuits oscillants parallèles est relié avec le branchement positif (+) ou le branchement négatif (-).

8. Convertisseur de puissance selon la revendication 3, **caractérisé en ce que** deux condensateurs de filtre (Cf) et deux circuits oscillants parallèles sont prévus par élément de phase (2), dont l'un est par ailleurs relié avec le branchement négatif(-) du circuit intermédiaire (Czk) et l'autre par ailleurs avec le branchement positif (+) du circuit intermédiaire (Czk).

9. Convertisseur de puissance selon l'une quelconque des revendications 3 à 8, **caractérisé en ce que** le circuit oscillant parallèle présente une fréquence de résonance qui diverge de la fréquence de résonance principale de moins d'un facteur 2, et est en particulier à peu près égale à la fréquence de résonance principale.
